# EUROPEAN PATENT APPLICATION

(11) **EP 2 422 917 A1**
(43) Date of publication of application: **29.02.2012**
(21) Application number: 11178425.2
(22) Date of filing: 23.08.2011
(51) Int. Cl.: B23K 26/40, B23K 26/04

(54) **Apparatus and method for laser scribing**

(30) Priority: 26.08.2010 KR 20100082977
(71) Applicant: Samsung LED Co., Ltd., Gyeonggi-do 443-743 (KR)
(72) Inventor: Jang, Yu Sung, 446-920 Gyeonggi-do (KR)
(74) Representative: Greene, Simon Kenneth

(57) **Abstract**

Provided is an apparatus for laser scribing. The laser scribing apparatus may include: a first laser emitter to emit a laser for a thickness measurement while moving towards a first axial direction of a substrate where a plurality of light emitting devices is formed; a laser receiver to receive a reflected laser when the laser emitted from the first laser emitter is reflected from the substrate; a thickness measurement unit to measure a thickness of the substrate based on a strength of the leaser received by the laser receiver; and a second laser emitter to generate a scribing line on the substrate by emitting a laser towards a first axial direction and a second axial direction of the substrate while adjusting a laser emission location based on the measured thickness.

## Description

### BACKGROUND

### 1. Field of the Invention

The present invention relates to a method and apparatus for laser scribing.

### 2. Description of the Related Art

A process of manufacturing a semiconductor light emitting device may be divided into a light emitting device manufacturing process and a light emitting device package/module process. The light emitting device manufacturing process may include a P/N semiconductor layer forming process including an active layer as an epitaxial growth on a substrate for manufacturing the light emitting device, an etching process, a P/N electrode forming process, a lapping process, and a laser scribing process.

The laser scribing process is performed by a laser scribing apparatus, and corresponds to a process of separating, into individual chips, the substrate where the lapping process is performed.

Prior to performing the laser scribing process, the laser scribing apparatus may measure a thickness of the substrate. The laser scribing apparatus may emit a laser on the substrate by adjusting a laser emission height based on the measured thickness.

Generally, the laser scribing apparatus may measure the thickness of the substrate by emitting the laser towards a first axial direction, for example, a horizontal axis of the substrate, and may generate a scribing line by emitting the laser towards the first axial direction.

The laser scribing apparatus may measure the thickness of the substrate by emitting the laser towards a second axial direction perpendicular to a first axis, for example, a vertical axis of the substrate, and may generate a scribing line by emitting the laser towards the second axial direction. As described above, the conventional laser scribing apparatus may measure the thickness by emitting the laser towards each of the first axial direction and the second axial direction of the substrate and thus, a processing time of the laser scribing process may increase. When the processing time increases, a number of substrates corresponding to the laser scribing process may decrease during a predetermined amount of time, deteriorating a productivity.

Also, the conventional laser scribing apparatus may generate the scribing line in the first axial direction of the substrate and then measure the thickness with respect to the second axial direction. Accordingly, when measuring the thickness of the substrate with respect to the second axial direction, a measurement error may occur due to the scribing line generated in the first axial direction, which makes it difficult to accurately measure the thickness.

### SUMMARY

An aspect of the present invention provides a method and apparatus for laser scribing that may measure a thickness by emitting a laser towards a first axial direction of a substrate where a plurality of light emitting devices is formed, and may perform laser scribing on the substrate by applying the measured thickness with respect to a first axial direction and a second axial direction perpendicular to the first axial direction.

According to an aspect of the present invention, there is provided an apparatus for laser scribing, including: a first laser emitter to emit a laser for a thickness measurement while moving towards a first axial direction of a substrate where a plurality of light emitting devices is formed; a laser receiver to receive a reflected laser when the laser emitted from the first laser emitter is reflected from the substrate; a thickness measurement unit to measure a thickness of the substrate based on a strength of the leaser received by the laser receiver; and a second laser emitter to generate a scribing line on the substrate by emitting a laser towards a first axial direction and a second axial direction of the substrate while adjusting a laser emission location based on the measured thickness.

The laser scribing apparatus may further include a reflecting member being disposed below the first laser emitter to pass the laser emitted from the first laser emitter, and to reflect, into one direction, the laser reflected from the substrate.

The second laser emitter may emit the laser towards the first axial direction of the substrate to generate the scribing line into the first axial direction of the substrate while adjusting the laser emission location by changing a distance from the substrate based on the measured thickness.

The second laser emitter may emit the laser towards the second axial direction of the substrate to generate the scribing line into the second axial direction of the substrate while adjusting the laser emission location by changing the distance from the substrate based on the measured thickness.

According to another aspect of the present invention, there is provided a method for laser scribing, including: emitting a laser for a thickness measurement while moving towards a first axial direction of a substrate where a plurality of light emitting devices is formed; receiving a reflected laser when the laser emitted from the first laser emitter is reflected from the substrate; measuring a thickness of the substrate based on a strength of the leaser received by the laser receiver; and generating a scribing line on the substrate by emitting a laser towards a first axial direction and a second axial direction of the substrate while adjusting a laser emission location based on the measured thickness.

The generating of the scribing line may include: emitting the laser towards the first axial direction of the substrate to generate the scribing line into the first axial direction of the substrate while adjusting the laser emission location by changing a distance from the substrate based on the measured thickness; and emitting the laser towards the second axial direction of the substrate to generate the scribing line into the second axial direction of the substrate while adjusting the laser emission location by changing the distance from the substrate based on the measured thickness.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG 1 is a block diagram illustrating a configuration of a laser scribing apparatus according to an embodiment of the present invention;
FIG 2 is a diagram to describe a laser scribing process of a substrate according to an embodiment of the present invention; and
FIG 3 is a flowchart illustrating a laser scribing method according to an embodiment of the present invention.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

When it is determined detailed description related to a related known function or configuration they may make the purpose of the present invention unnecessarily ambiguous in describing the present invention, the detailed description will be omitted here. Also, terms used herein are defined to appropriately describe the exemplary embodiments of the present invention and thus may be changed depending on a user, the intent of an operator, or a custom. Accordingly, the terms must be defined based on the following overall description of this specification.

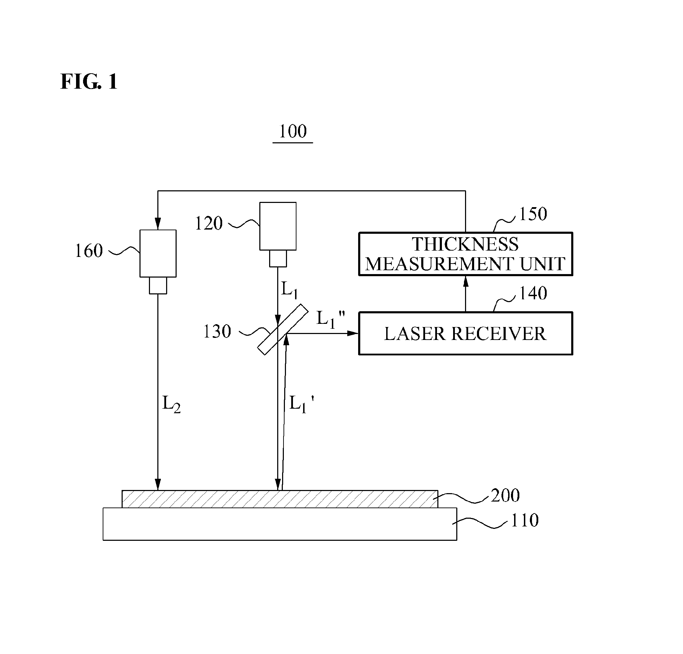

FIG 1 is a block diagram illustrating a configuration of a laser scribing apparatus 100 according to an embodiment of the present invention. Referring to FIG 1, the laser scribing apparatus 100 may include a stage 110, a first laser emitter 120, a reflecting member 130, a laser receiver 140, a thickness measurement unit 150, and a second laser emitter 160.

The stage 110 may receive and thereby fix a substrate 200 where a plurality of light emitting devices is formed. The substrate 200 where the plurality of light emitting devices is formed may be manufactured through a process of forming P and N semiconductor layers on a substrate for manufacturing a light emitting device, for example, a sapphire substrate, a gallium arsenide (GaAs) substrate, a silicon carbide (SiC) substrate, an indium phosphide (InP) substrate, gallium phosphide (GaP) substrate, and the like. The P and N substrate layers may include an active layer using an epitaxial growth. In this instance, a process of forming a P electrode and an N electrode on the P and N semiconductor layers may be further included. During this process, an etching process may be performed so that one layer of the P and N semiconductor layers may be partially exposed. To polish the substrate 200, a grinding process, a lapping process, a polishing process, and the like may be performed.

The first layer emitter 120 may emit a laser L₁ towards the substrate 200 disposed on the stage 110. The first laser emitter 120 may emit the laser L₁ to measure a thickness of the substrate 200 and thus, may emit the laser L₁ while moving towards a first axial direction of the substrate 200.

The laser L₁ emitted from the first laser emitter 120 may reach the substrate 200 and be reflected from the substrate 200.

The reflecting member 130 may be disposed below the first laser emitter 120. The reflecting member 130 may reflect, into one direction, a laser L₁' reflected from the substrate 200.

The laser receiver 140 may receive a laser L₁" reflected from the reflecting member 140. As shown in FIG 1, the laser L₁ emitted from the first laser emitter 120 may be reflected from the substrate 200 towards the reflecting member 130, and be reflected via the reflecting member 130 to reach the laser receiver 140.

The thickness measurement unit 150 may measure the thickness of the substrate 200 using a strength of the laser L₁" received by the laser receiver 140. When a laser emitted from the first laser emitter 120 is reflected from the substrate 200 within a focal distance of the first laser emitter 120, the strength of the laser may be strongest.

When the thickness of the substrate 200 is uneven, a boundary surface between the substrate 200 and air may not be positioned within the focal distance of the first laser emitter 120 and be positioned above or below the focal distance. Accordingly, the thickness measurement unit 150 may measure the thickness of the substrate 200 using the strength of the laser L₁" and the focal distance.

The second laser emitter 160 may generate a scribing line on the substrate 200 by emitting a laser L₂ towards a first axial direction and a second axial direction of the substrate 200 while adjusting a laser emission location based on the measured thickness.

The second laser emitter 160 may emit the laser L₂ towards the first axial direction of the substrate 200 while adjusting a laser emission location by changing a distance from the substrate 200 based on the measured thickness. Accordingly, the scribing line may be generated into the first axial direction of the substrate 200.

When emission of the laser L₂ towards the first axial direction is completed, the laser scribing apparatus 100 may rotate the substrate 20 into one direction by 90 degrees. This may be performed by rotating the stage 110 accommodated with the substrate 200 by 90 degrees.

The second laser emitter 160 may emit the laser L₂ towards the second axial direction of the substrate 200 while adjusting the laser emission location by changing the distance from the substrate 200 based on the measured thickness. Accordingly, the scribing line may be generated into the second axial direction of the substrate 200.

As described above, the laser scribing apparatus 100 may measure the thickness only with respect to the first axial direction of the substrate 200, may adjust the laser emission location based on the measured thickness, and may emit the laser L₂ towards the first axial direction and the second axial direction of the substrate 200. Accordingly, a thickness measurement process with respect to the second axial direction of the substrate 200 may be omitted.

The laser scribing apparatus 100 may be employed to generate a scribing line on a substrate where a plurality of semiconductor devices is formed, in addition to the substrate 200 where the plurality of light emitting devices is formed.

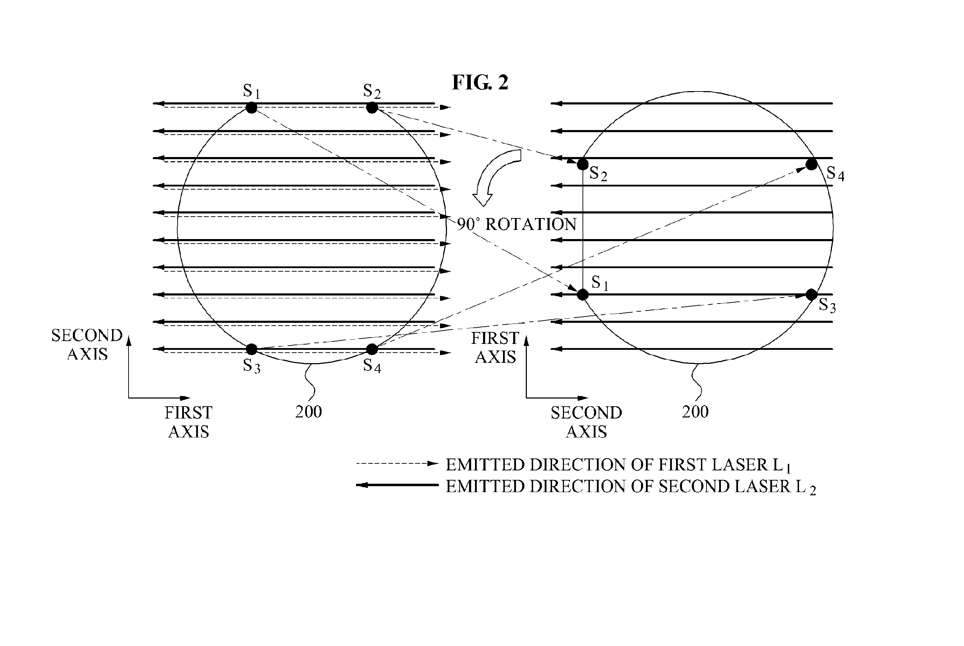

FIG 2 is a diagram to describe a laser scribing process of a substrate according to an embodiment of the present invention. Hereinafter, the laser scribing process including a thickness measurement of the substrate 200 will be described with reference to FIG 2. Referring to FIG 2, in a state where the substrate 200 including the plurality of light emitting devices is received and is fixed to the stage 110, the laser scribing apparatus 100 may emit the laser L₁ corresponding to a first laser for a thickness measurement while moving towards a first axial direction of the substrate 200 as shown in a left diagram of FIG 2.

The laser L₁ may enter the substrate 200 and be reflected from a top surface of the substrate 200. As shown in FIG 1, the reflecting member 130 may reflect the laser L₁' reflected from the substrate 200.

The laser receiver 140 may receive the laser L₁" reflected from the reflecting member 130, and the thickness measurement unit 150 may measure the thickness of the substrate 200 with respect to the first axial direction using the received the laser L₁".

The laser scribing apparatus 100 may emit the laser L₂ corresponding to a second laser while moving towards the first axial direction of the substrate while adjusting the laser emission location by changing the distance from the substrate 200 based on the measured thickness.

The laser L₂ corresponding to the second laser is to generate a scribing line into the thickness direction of the substrate 200. To uniformly generate scribing lines along the thickness of the substrate 200, the laser emission location may be adjusted. That is, a laser focal distance may be uniformly maintained by moving the second laser emitter 160 towards a vertical direction (z direction) along the thickness of the substrate 200. Accordingly, the scribing line may be generated into the first axial direction of the substrate 200.

When the scribing line is generated into the first axial direction of the substrate 200, the substrate 200 may be rotated by 90 degrees by turning the stage 110. Due to the rotation of the substrate 200, reference points S₁, S₂, S₃, and S₄ on the substrate 200 shown in the left diagram of FIG 2 may be relocated as shown in a right diagram of FIG 2.

As the substrate 200 is rotated, an axis of the substrate 200 towards which the laser L₂ is emitted may be changed. Substantially, a location of the second laser emitter 160 is not changed.

After rotating the substrate 200, the second laser emitter 160 may emit the laser L₂ towards the second axial direction of the substrate 200 while changing the laser emission direction by changing the distance from the substrate 200 based on the measured thickness. Accordingly, the scribing line may be generated into the second axial direction of the substrate 200.

As shown in FIG 2, the laser scribing apparatus 100 may generate scribing lines on a first axis and a second axis while changing the laser emission location based on the thickness measured with respect to the first axial direction of the substrate 200. Accordingly, by omitting a thickness measurement process with respect to the second axial direction of the substrate 200, laser scribing may be performed with respect to a relatively large number of substrates during a predetermined amount of time.

Also, since the thickness with respect to the second axial direction of the substrate 200 is not measured after generating the scribing line into the first axial direction of the substrate 200, it is possible to remove a measurement error occurring when measuring the thickness with respect to the second axial direction in the conventional art.

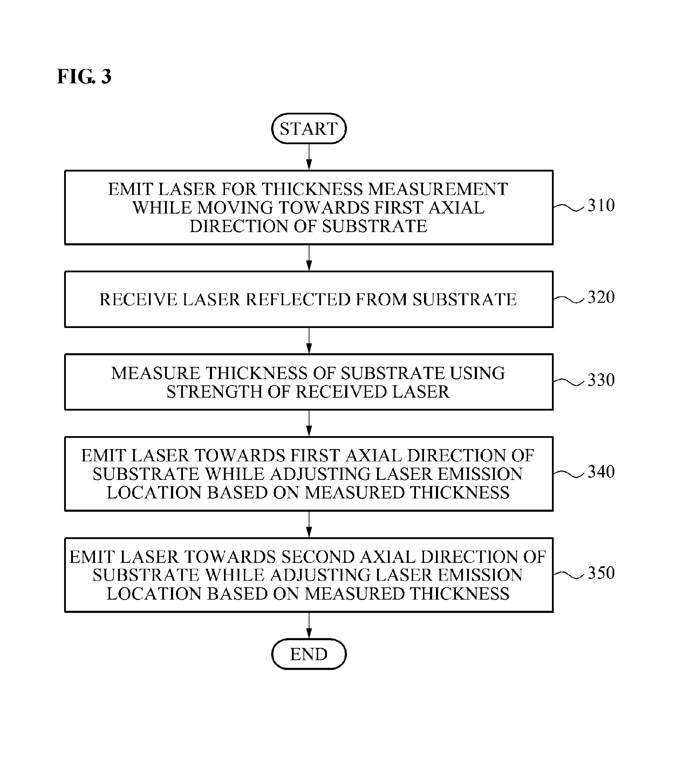

FIG 3 is a flowchart illustrating a laser scribing method according to an embodiment of the present invention. The laser scribing method may be performed by the laser scribing apparatus 100 of FIG 1.

Referring to FIG 3, in operation 310, the laser scribing apparatus 100 may emit a laser for a thickness measurement while moving towards a first axial direction of the substrate 200 where a plurality of light emitting devices is formed.

In operation 320, the laser scribing apparatus 100 may receive a laser reflected from the substrate 200. In operation 330, the laser scribing apparatus 100 may measure a thickness of the substrate 200 using a strength of the received laser.

In operation 340, the laser scribing apparatus 100 may emit the laser towards the first axial direction of the substrate 200 while adjusting a laser emission location based on the measured thickness. The laser emission location may correspond to an emission location of the second laser emitter 160 for generating a scribing line, and may be a distance for uniformly maintaining a laser focal distance of the second laser emitter 160 on the substrate 200. Through the laser emission, the scribing line may be generated into the first axial direction of the substrate 200.

When the scribing line is generated into the first axial direction, the laser scribing apparatus 100 may emit the laser towards the second axial direction of the substrate 200 while adjusting the laser emission location based on the measured thickness in operation 350. Through the laser emission, the scribing line may be generated into the second axial direction of the substrate 200.

Through the aforementioned process, the laser scribing apparatus 100 may measure the thickness only with respect to the first axial direction of the substrate 200 and thereby generate scribing lines on the first axis and the second axis of the substrate 200 based on the measured thickness.

According to embodiments of the present invention, laser scribing of a substrate may be performed by emitting a laser towards a first axial direction of the substrate to measure a thickness, and by applying the measured thickness with respect to the first axial direction and a second axial direction perpendicular to the first axial direction. Accordingly, a process of emitting a laser into the second axial direction of the substrate to measure a thickness may be omitted and thus, a relatively large number of substrates may be laser scribed during a predetermined amount of time.

Also, since the thickness is not measured with respect to the second axial direction of the substrate, it is possible to remove a measurement error occurring when measuring the thickness with respect to the second axial direction.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. An apparatus for laser scribing, comprising:
a first laser emitter (120) to emit a laser for a thickness measurement while moving towards a first axial direction of a substrate where a plurality of light emitting devices is formed;
a laser receiver (140) to receive a reflected laser when the laser emitted from the first laser emitter is reflected from the substrate;
a thickness measurement unit (150) to measure a thickness of the substrate based on a strength of the leaser received by the laser receiver; and
a second laser emitter (160) to generate a scribing line on the substrate by emitting a laser towards a first axial direction and a second axial direction of the substrate while adjusting a laser emission location based on the measured thickness.

2. The apparatus of claim 1, further comprising:
a reflecting member (130) being disposed below the first laser emitter to pass the laser emitted from the first laser emitter, and to reflect, into one direction, the laser reflected from the substrate.

3. The apparatus of claim 1 or 2, wherein the second laser emitter (160) emits the laser towards the first axial direction of the substrate to generate the scribing line into the first axial direction of the substrate while adjusting the laser emission location by changing a distance from the substrate based on the measured thickness.

4. The apparatus of claim 3, wherein the second laser emitter (160) emits the laser towards the second axial direction of the substrate to generate the scribing line into the second axial direction of the substrate while adjusting the laser emission location by changing the distance from the substrate based on the measured thickness.

5. A method for laser scribing, comprising:
emitting (310) a laser for a thickness measurement while moving towards a first axial direction of a substrate where a plurality of light emitting devices is formed;
receiving (320) a reflected laser when the laser emitted from the first laser emitter is reflected from the substrate;
measuring a thickness of the substrate (330) based on a strength of the leaser received by the laser receiver; and
generating (340) a scribing line on the substrate by emitting a laser towards a first axial direction and a second axial direction of the substrate while adjusting a laser emission location based on the measured thickness.

6. The method of claim 5, wherein the generating of the scribing line comprises:
emitting the laser towards the first axial direction of the substrate to generate the scribing line into the first axial direction of the substrate while adjusting the laser emission location by changing a distance from the substrate based on the measured thickness; and
emitting the laser towards the second axial direction of the substrate to generate the scribing line into the second axial direction of the substrate while adjusting the laser emission location by changing the distance from the substrate based on the measured thickness.
